# DEMANDE DE BREVET EUROPEEN

(11) **EP 3 480 037 A1**
(43) Date de publication de la demande: **08.05.2019**
(21) Numéro de dépôt: 18202070.1
(22) Date de dépôt: 23.10.2018
(51) Int. Cl.: B60G 7/00, B60K 5/12

(54) **BIELLETTE ANTICOUPLE PROGRESSIVE POUR GROUPE MOTO-PROPULSEUR DE VEHICULE AUTOMOBILE**

(30) Priorité: 07.11.2017 FR 1760433
(71) Demandeur: PSA Automobiles SA, 78300 Poissy (FR)
(72) Inventeur: LAMBERT, SAMUEL, 25200 MONTBELIARD (FR)

(57) **Abrégé**

L'invention porte principalement sur une biellette anti-couple (10) destinée à assurer une liaison entre un organe, tel qu'un moteur, et un élément structurel tel qu'une caisse ou un berceau d'un véhicule automobile comportant un corps (11), un élément rigide (15), un premier élément élastique (22.1) et un deuxième élément élastique (22.2) montés comprimés, l'élément rigide (15) ainsi que le premier élément élastique (22.1) et le deuxième élément élastique (22.2) formant un empilage glissant sous l'effet d'un effort appliqué sur l'élément rigide (15), caractérisée en ce que ladite biellette (10) comporte un dispositif de butée de fin de course (26) intégré à l'intérieur du premier et du deuxième éléments élastiques (22.1, 22.2) et configuré pour qu'en fin de course de l'empilage glissant, l'élément rigide (15) vienne en appui contre une épaisseur de matière (E1, E2) d'un élément élastique (22.1, 22.2) correspondant.

## Description

La présente invention porte sur une biellette anti-couple pour groupe motopropulseur ou groupe électromoteur de véhicule automobile. On rappelle que le groupe motopropulseur est constitué notamment du moteur thermique, de la boîte de vitesses, et du différentiel du véhicule, le groupe électromoteur du moteur et du réducteur.

De façon connue en soi, les groupes motopropulseurs transversaux peuvent être fixés à l'aide d'une architecture dite pendulée. Une telle architecture est constituée de cales porteuses fixées sur le brancard ayant pour fonction de reprendre la masse du groupe motopropulseur et les efforts verticaux subis par celui-ci, ainsi que d'une biellette anti-couple reliant le groupe motopropulseur à un berceau chargée de reprendre le couple du groupe motopropulseur suivant l'axe du véhicule.

Les biellettes de reprise de couple comportent généralement un ou plusieurs éléments en caoutchouc naturel pour assurer le filtrage des vibrations entre l'organe mécanique et la structure du véhicule.

Un dispositif décrit dans le document US2012/0056395 comporte un élément de montage en liaison avec le berceau, en contact avec la partie coulissante sur sa circonférence externe. Toutefois, une excroissance délimitée par un trou de passage interdit la présence d'une vis d'assemblage avec le berceau perpendiculairement à l'axe de la biellette pour cause d'interférence avec une zone de glissement.

Par ailleurs, certains dispositifs sont configurés de telle façon que la limitation des débattements est réalisée par des butées externes engendrant de fortes contraintes locales dans la partie élastique et donc des prestations dégradées.

L'invention vise à remédier efficacement à au moins un des inconvénients précités en proposant une biellette anti-couple destinée à assurer une liaison entre un organe, tel qu'un moteur, et un élément structurel tel qu'une caisse ou un berceau d'un véhicule automobile comportant:
- un corps ayant un axe longitudinal définissant l'axe de la biellette, ledit corps étant muni d'une interface de fixation avec l'une des pièces parmi l'organe et l'élément structurel du véhicule automobile,
- un élément rigide muni d'une interface de fixation avec l'autre pièce parmi l'organe et l'élément structurel du véhicule automobile,
- un premier élément élastique et un deuxième élément élastique disposés de part et d'autre de l'élément rigide,
- le premier élément élastique et le deuxième élément élastique étant montés comprimés au moyen d'une coupelle venant en appui sur des extrémités d'au moins deux organes de montage,
- l'élément rigide ainsi que le premier élément élastique et le deuxième élément élastique formant un empilage glissant sous l'effet d'un effort appliqué sur l'élément rigide, caractérisée en ce que ladite biellette comporte un dispositif de butée de fin de course intégré à l'intérieur du premier et du deuxième éléments élastiques et configuré pour qu'en fin de course de l'empilage glissant, l'élément rigide vienne en appui contre une épaisseur de matière d'un élément élastique correspondant.

L'invention permet ainsi de filtrer et de limiter les débattements sous couple grâce aux éléments élastiques maintenus au repos en compression suivant l'axe de la biellette. L'invention permet également une amélioration de la tenue en endurance liée à une absence de sollicitations en traction quel que soit le sens de l'effort mécanique appliqué suivant l'axe de la biellette. L'invention garantit également une progressivité des saturations sur toute la plage de fonctionnement et notamment en fin de course afin de maitriser les efforts en fonctionnement lors de fortes variations du couple moteur au bénéfice du dimensionnement des pièces en interface (berceau, organe), des assemblages vissés associés et des autres éléments constitutifs du groupe moto-propulseur. L'invention présente également des avantages en termes d'acoustique et de masse sans remettre en cause les interfaces de fixation existantes du côté de l'élément structurel du véhicule et donc sans investissement supplémentaire.

Selon une réalisation, le dispositif de butée de fin de course comporte des protubérances issues de l'élément rigide, chaque protubérance étant engagée à l'intérieur d'une ouverture borgne ménagée dans un élément élastique correspondant.

Selon une réalisation, les interfaces de fixation présentent des axes perpendiculaires à l'axe de ladite biellette.

Selon une réalisation, les organes de montage sont positionnés à l'extérieur de l'empilage glissant.

Selon une réalisation, ladite biellette comporte des zones de guidage de l'empilage glissant.

Selon une réalisation, les zones de guidage comportent chacune une creusure réalisée dans au moins un élément de l'empilage glissant autorisant le passage d'un organe de montage correspondant. Une telle configuration permet de libérer un trou pour le passage d'un axe de fixation entre l'élément rigide et le berceau.

Selon une réalisation, des excroissances issues d'au moins un élément élastique sont intercalées entre les organes de montage et l'élément rigide. Cela permet d'autoriser un débattement angulaire relatif suivant deux axes perpendiculaires à l'axe de la biellette dont l'un correspond à celui d'une articulation du corps et l'autre formant un repère orthogonal.

Selon une réalisation, les organes de montage comportent des entretoises traversées par des vis de maintien en compression du premier et du deuxième éléments élastiques.

Selon une réalisation, le premier élément élastique et le deuxième élément élastique forment un seul composant.

Selon une réalisation, le premier élément élastique et le deuxième élément élastique sont composés d'un empilage de plusieurs sous-éléments élastiques.

Selon une réalisation, le premier élément élastique et le deuxième élément élastique sont réalisés dans un matériau synthétique, notamment de type polyuréthane, silicone, ou EPDM (éthylène-propylène-diène monomère). De tels matériaux se caractérisent par une très bonne tenue à la compression, une faible rigidification dynamique au bénéfice de l'acoustique, ainsi qu'une densité inférieure à celle du caoutchouc au bénéfice de la masse. En variante, les éléments élastiques peuvent être réalisés en caoutchouc naturel.

L'invention sera mieux comprise à la lecture de la description qui suit et à l'examen des figures qui l'accompagnent. Ces figures ne sont données qu'à titre illustratif mais nullement limitatif de l'invention.

La figure 1 montre une vue de dessus d'une biellette anti-couple selon la présente invention;

La figure 2 est une vue suivant le plan de coupe A-A de la figure 1;

La figure 3 est une vue suivant le plan de coupe B-B de la figure 1;

La figure 4 est une vue suivant le plan de coupe C-C de la figure 1;

Les figures 5a et 5b sont des vues de dessus illustrant le déplacement de l'élément rigide de la biellette anti-couple selon l'invention respectivement lors de l'application d'un effort de traction et de compression.

Les éléments identiques, similaires, ou analogues conservent la même référence d'une figure à l'autre.

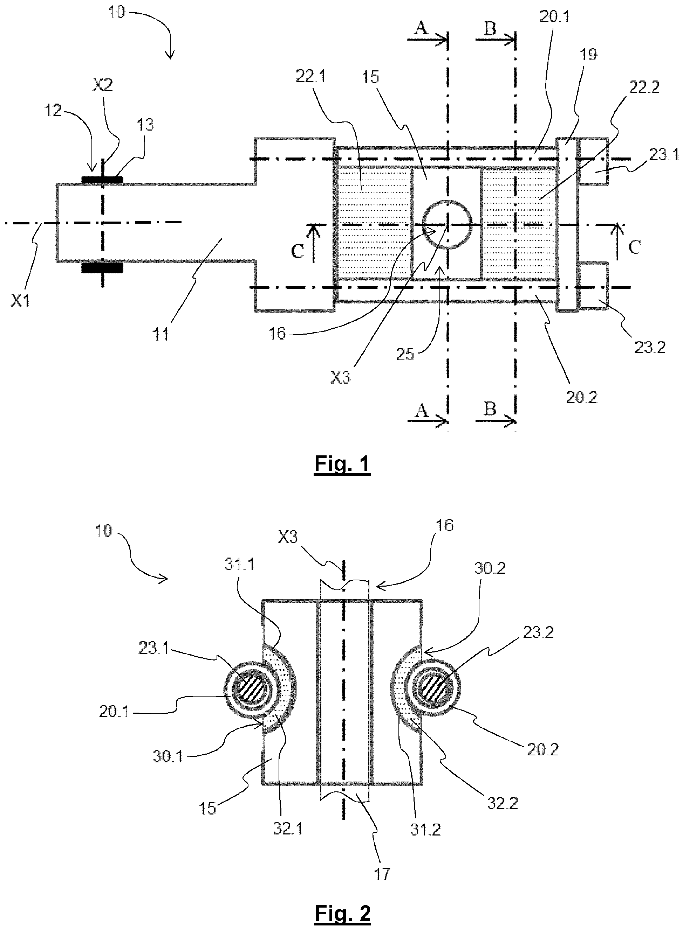

La figure 1 montre une biellette anti-couple 10 destinée à assurer une liaison entre un organe, tel qu'un moteur, et un élément structurel, tel qu'une caisse ou un berceau d'un véhicule automobile (non représentés).

Cette biellette 10 comporte un corps 11 ayant un axe longitudinal X1 définissant l'axe de la biellette 10. Le corps 11 est muni d'une interface de fixation 12 avec l'organe. De préférence, l'interface de fixation 12 intègre une articulation élastique 13 assemblée dans le corps 11 rigide et reliée à l'organe. Le corps 11 est par exemple réalisé en métal (acier, aluminium, fonte) ou en matière rigide plastique (polyamide chargé de fibres de verre), ou dans un assemblage de plusieurs sous-composants réalisés avec ces matériaux.

Un élément rigide 15 comporte une interface de fixation 16 avec le berceau. L'élément rigide 15 est assemblé avec le berceau par l'intermédiaire d'un axe de fixation 17 traversant une ouverture de l'interface 16, tel que montré sur la figure 2. Cet axe de fixation 17 est positionné perpendiculairement à l'axe X1 et dans le plan médian de la biellette 10. L'élément rigide 15 est disposé longitudinalement entre le corps 11 et une coupelle 19, et transversalement entre deux organes de montage 20.1, 20.2, tels que des entretoises. L'élément rigide 15 est par exemple réalisé en métal (acier, aluminium, fonte) ou en matière rigide plastique (polyamide chargé de fibres de verre), ou dans un assemblage de plusieurs sous-composants réalisés avec ces matériaux.

Les interfaces de fixation 12, 16 présentent avantageusement des axes X2, X3 perpendiculaires à l'axe X1 de la biellette 10. Les axes X2, X3 des interfaces de fixation 12, 16 sont eux-mêmes perpendiculaires l'un par rapport à l'autre. En variante, les axes X2, X3 des interfaces de fixation 12 sont parallèles l'un par rapport à l'autre.

En outre, un premier élément élastique 22.1 et un deuxième élément élastique 22.2 sont disposés longitudinalement de part et d'autre de l'élément rigide 15. Les éléments élastiques 22.1, 22.2 sont montés comprimés suivant l'axe de la biellette 10 au moyen d'une coupelle 19 venant en appui sur l'élément élastique 22.2 et sur des extrémités des entretoises 20.1, 20.2. Ces entretoises 20.1, 20.2 viennent en appui sur le corps 11 par leur autre extrémité. L'effort de compression est appliqué par deux vis 23.1, 23.2 traversant les entretoises 20.1, 20.2 creuses en contact avec la coupelle 19. Les vis 23.1, 23.2 sont vissées dans le corps 11 ou dans la coupelle 19.

L'élément rigide 15, ainsi que le premier élément élastique 22.1 et le deuxième élément élastique 22.2, forment un empilage glissant 25 sous l'effet d'un effort appliqué sur l'élément rigide 15 via le berceau.

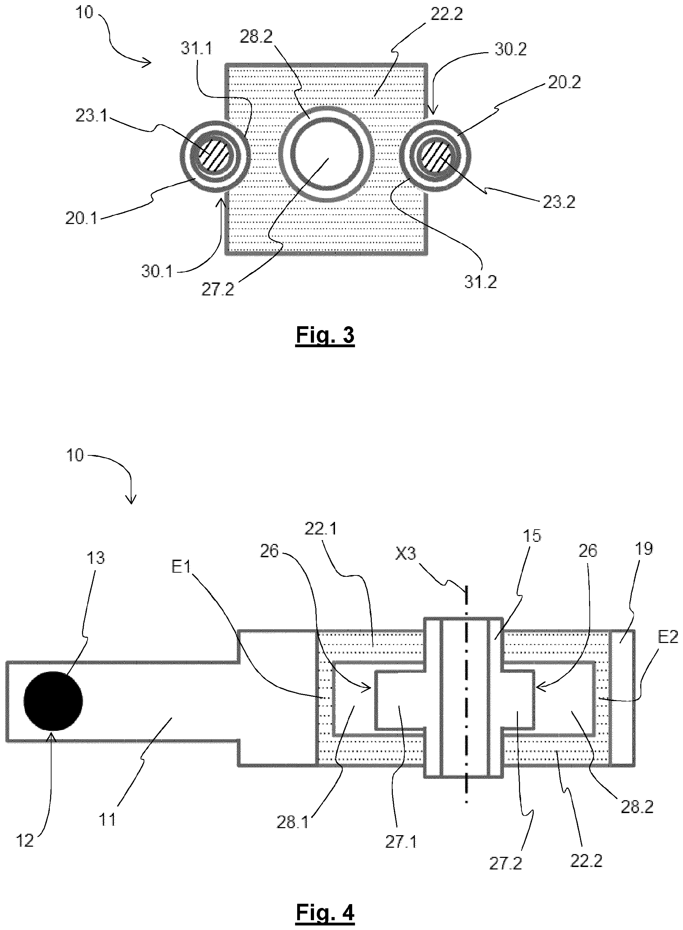

Avantageusement, comme on peut le voir sur la figure 4, un dispositif de butée de fin de course 26 est intégré à l'intérieur du premier et du deuxième éléments élastiques 22.1, 22.2. Le dispositif de butée 26 est configuré pour qu'en fin de course de l'empilage glissant 25, l'élément rigide 15 vienne en appui contre une épaisseur de matière E1, E2 d'un élément élastique 22.1, 22.2 correspondant.

Plus précisément, le dispositif de butée 26 comporte des protubérances 27.1, 27.2 issues de l'élément rigide 15 s'étendant en saillie suivant l'axe de la biellette 10. Ces protubérances 27.1, 27.2 sont situées dans le plan médian de la biellette 10. Ces protubérances 27.1, 27.2 sont engagées à l'intérieur d'ouvertures 28.1, 28.2 borgnes ménagées dans les éléments élastiques 22.1, 22.2. Plus précisément, une première protubérance 27.1 issue de la face de l'élément rigide 15 tournée vers le corps 11 est insérée à l'intérieur de l'ouverture borgne 28.1 ménagée dans l'élément élastique 22.1. Une deuxième protubérance 27.2 issue d'une face de l'élément rigide 15 tournée vers la coupelle 19 est insérée à l'intérieur de l'ouverture borgne 28.2 ménagée dans l'élément élastique 22.2.

Une longueur axiale d'une ouverture 28.1, 28.2 est supérieure à une longueur axiale d'une protubérance 27.1, 27.2 correspondante. Les écarts entre les extrémités des protubérances 27.1, 27.2 et les fonds des ouvertures 28.1, 28.2 définissent le débattement de l'empilage glissant 25. Le débattement pourra être ajusté en fonction de l'application en adaptant une longueur des protubérances 27.1, 27.2 et/ou une profondeur des ouvertures 28.1, 28.2. Les longueurs des protubérances 27.1, 27.2 peuvent être différentes.

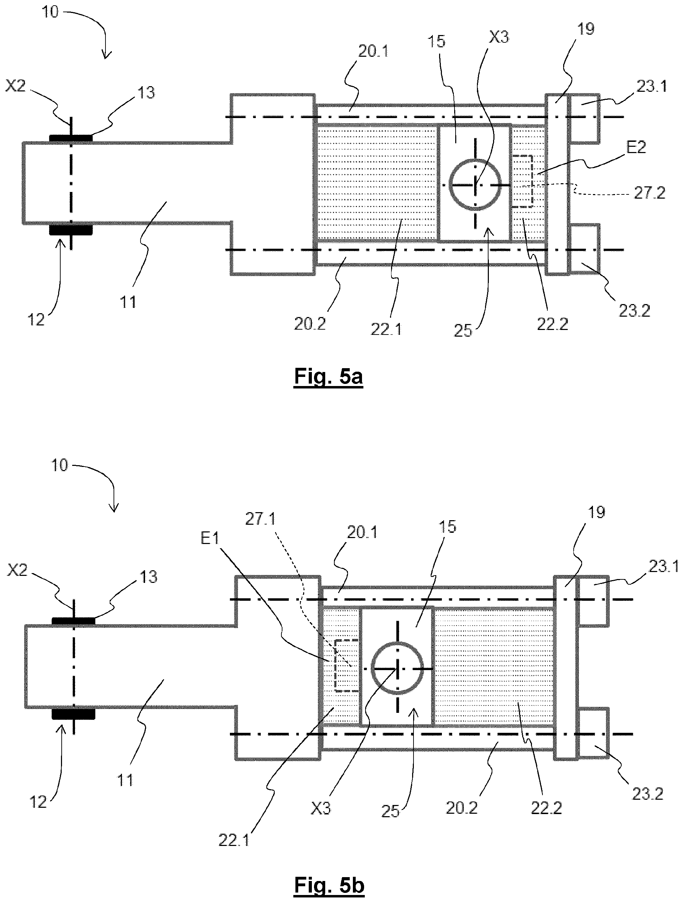

On assure une fonction de butée de fin de course progressive en préservant une épaisseur E1, E2 de matière filtrante à l'extrémité non débouchante de chaque ouverture 28.1, 28.2 des éléments élastiques 22.1, 22.2. En effet, la biellette 10 présente une épaisseur de matière E1 entre le fond de l'ouverture 28.1 et le corps 11 contre laquelle vient en appui la protubérance 27.1 de l'élément rigide 15 lorsque ledit élément rigide 15 se situe, en fin de course, dans une position longitudinale extrême (cf. figures 4 et 5b). La biellette 10 présente une épaisseur de matière E2 entre le fond de l'ouverture 28.2 et la coupelle 19 contre laquelle vient en appui la protubérance 27.2 de l'élément rigide 15 lorsque ledit élément rigide 15 se situe, en fin de course, dans une autre position longitudinale extrême opposée (cf. figures 4 et 5a). On évite ainsi le contact direct entre les composants rigides 11, 15, 19 au bénéfice de la progressivité d'amortissement des efforts en fin de course.

Suivant une réalisation particulière, les épaisseurs E1, E2 de matière sont par exemple comprises entre 5 et 20 mm. Les diamètres des protubérances 27.1, 27.2 et des ouvertures borgnes 28.1, 28.2 correspondantes sont par exemple compris entre 10 et 20 mm.

Les entretoises 20.1, 20.2 sont positionnées avantageusement à l'extérieur de l'empilage glissant 25. Cela permet de libérer le trou de l'interface de fixation 16 pour le passage de l'axe de fixation 17 entre l'élément rigide 15 et le berceau.

Comme cela est visible sur les figures 2 et 3, des zones de guidage 30.1, 30.2 de l'empilage glissant 25 comportent chacune une creusure 31.1, 31.2 réalisée dans au moins un élément de l'empilage glissant 25 pour autoriser le passage d'une entretoise 20.1, 20.2 correspondante. L'empilage glissant 25 est ainsi guidé par les zones de guidage 30.1, 30.2 suivant l'allongement des entretoises 20.1, 20.2.

Des excroissances 32.1, 32.2 issues des éléments élastiques 22.1 et/ou 22.2 sont avantageusement intercalées entre les entretoises 20.1, 20.2 et l'élément rigide 15. Cela permet d'autoriser un débattement angulaire relatif suivant deux axes perpendiculaires à l'axe X1 de la biellette 10 dont l'un correspond à celui de l'articulation 13 et l'autre formant un repère orthogonal.

On décrit ci-après en référence avec les figures 5a et 5b, le fonctionnement de la biellette 10 selon l'invention.

Lorsqu'un effort de traction s'exerce sur la biellette 10, le corps 11 et l'élément rigide 15 reliés respectivement à l'organe et au berceau s'éloignent l'un par rapport à l'autre du fait du déplacement, suivant les zones de guidage 30.1, 30.2, de l'empilage glissant 25 vers la droite sur la figure 5a. Les éléments élastiques 22.1, 22.2 se déforment, de sorte que l'élément élastique 22.2 se comprime davantage et l'élément élastique 22.1 pré-contraint initialement se détend, ce qui assure le filtrage des vibrations et la limitation des débattements. En position extrême de fin de course, la protubérance 27.2 vient en appui contre l'épaisseur E2 de matière formant ainsi une butée progressive.

De façon analogue, lorsqu'un effort de compression s'exerce sur la biellette 10, le corps 11 et l'élément rigide 15 se rapprochent l'un par rapport à l'autre du fait du déplacement, suivant les zones de guidage 30.1, 30.2, de l'empilage glissant 25 vers la gauche sur la figure 5b. Les éléments élastiques 22.1, 22.2 se déforment, de sorte que l'élément élastique 22.1 se comprime davantage et l'élément élastique 22.2 pré-contraint initialement se détend, ce qui assure le filtrage des vibrations et la limitation des débattements. En position extrême de fin de course, la protubérance 27.1 vient en appui contre l'épaisseur de matière E1 formant ainsi une butée progressive.

On observe que quel que soit le sens de l'effort mécanique appliqué suivant l'axe X1 de la biellette 10, les éléments élastiques 22.1, 22.2 ne subissent pas d'effort de traction compte tenu de leur montage précontraint en compression. On peut alors tirer profit de cette caractéristique pour réaliser les éléments élastiques 22.1, 22.2 dans un matériau synthétique, notamment de type polyuréthane, silicone, ou EPDM (éthylène-propylène-diène monomère). De tels matériaux se caractérisent par une très bonne tenue à la compression, une faible rigidification dynamique au bénéfice de l'acoustique, et une densité inférieure à celle du caoutchouc au bénéfice de la masse. En variante, les éléments élastiques 22.1, 22.2 peuvent être réalisés en caoutchouc naturel.

Il est possible d'adapter la biellette 10 selon l'invention suivant plusieurs modes de réalisation. Ainsi, les entretoises 20.1, 20.2 peuvent être solidaires du corps 11 ou de la coupelle 19. En variante, les entretoises 20.1, 20.2 sont divisées en demi-entretoises 20.1, 20.2 solidaires respectivement du corps 11 et de la coupelle 19. Les entretoises 20.1, 20.2 sont alors mises en contact dans l'espace compris entre le corps 11 et la coupelle 19.

En variante, les vis 23.1, 23.2 de maintien en compression peuvent être remplacées par des goujons vissés dans le corps 11 ou la coupelle 19 et des écrous en appui sur le corps 11 ou la coupelle 19.

En variante, les entretoises 20.1, 20.2 ainsi que les vis 23.1, 23.2 de maintien en compression peuvent être remplacées par deux tirants sertis à leurs extrémités sur la coupelle 19 et/ou le corps 11.

Les éléments élastiques 22.1, 22.2 forment ici deux éléments distincts l'un de l'autre. En variante, les éléments élastiques 22.1, 22.2 forment un seul composant, c'est-à-dire qu'ils forment une pièce d'un seul tenant. En variante, les éléments élastiques 22.1, 22.2 sont composés d'un empilage de plusieurs sous-éléments élastiques. Les sous-éléments élastiques peuvent présenter des matières et géométries différentes les unes par rapport aux autres.

En variante, la biellette 10 est dépourvue d'articulation élastique 13 intégrée. Le corps 11 est alors relié rigidement au moteur.

En variante, l'élément rigide 15 est relié à l'organe et non à l'élément structurel du véhicule, tel que la caisse ou le berceau. Dans ce cas, le corps 11 est relié à l'élément structurel via son interface de fixation 12. Le montage est ainsi inversé. Le sens de montage dépend de l'application.

En variante, le nombre d'entretoises 20.1, 20.2 est supérieur à deux.

Il est à noter que le dispositif de butée de fin de course 26 intégré à l'intérieur des éléments élastiques 22.1, 22.2 pourra être réalisé indépendamment d'une implantation des organes de montage 20.1, 20.2 à l'extérieur de l'empilage glissant 25. Ainsi, une biellette 10 peut comporter le dispositif de butée de fin de course 26 tout en ayant des organes de montage 20.1, 20.2 traversant des ouvertures ménagées dans l'élément rigide 15. Inversement, les organes de montage 20.1, 20.2 peuvent être implantés à l'extérieur de l'empilage glissant 25, tandis que la biellette 10 comporte un système de butée rigide contre les pièces d'extrémité (corps 11 ou coupelle 19). Le dispositif de butée de fin de course 26 et la configuration à organes de montage externes peuvent donc être protégés indépendamment l'un de l'autre.

## Revendications

1. Biellette anti-couple (10) destinée à assurer une liaison entre un organe, tel qu'un moteur, et un élément structurel tel qu'une caisse ou un berceau d'un véhicule automobile comportant:
- un corps (11) ayant un axe longitudinal (X1) définissant l'axe de la biellette (10), ledit corps (11) étant muni d'une interface de fixation (12) avec l'une des pièces parmi l'organe et l'élément structurel du véhicule automobile,
- un élément rigide (15) muni d'une interface de fixation (16) avec l'autre pièce parmi l'organe et l'élément structurel du véhicule automobile,
- un premier élément élastique (22.1) et un deuxième élément élastique (22.2) disposés de part et d'autre de l'élément rigide (15),
- le premier élément élastique (22.1) et le deuxième élément élastique (22.2) étant montés comprimés au moyen d'une coupelle (19) venant en appui sur des extrémités d'au moins deux organes de montage (20.1, 20.2),
- l'élément rigide (15) ainsi que le premier élément élastique (22.1) et le deuxième élément élastique (22.2) formant un empilage glissant (25) sous l'effet d'un effort appliqué sur l'élément rigide (15), **caractérisée en ce que** ladite biellette (10) comporte un dispositif de butée de fin de course (26) intégré à l'intérieur du premier et du deuxième éléments élastiques (22.1, 22.2) et configuré pour qu'en fin de course de l'empilage glissant (25), l'élément rigide (15) vienne en appui contre une épaisseur de matière (E1, E2) d'un élément élastique (22.1, 22.2) correspondant.

2. Biellette selon la revendication 1, **caractérisée en ce que** le dispositif de butée de fin de course comporte des protubérances (27.1, 27.2) issues de l'élément rigide (15), chaque protubérance (27.1, 27.2) étant engagée à l'intérieur d'une ouverture borgne (28.1, 28.2) ménagée dans un élément élastique (22.1, 22.2) correspondant.

3. Biellette selon la revendication 1 ou 2, **caractérisée en ce que** les interfaces de fixation présentent des axes (X2, X3) perpendiculaires à l'axe (X1) de ladite biellette.

4. Biellette selon l'une quelconque des revendications 1 à 3, **caractérisée en ce que** les organes de montage (20.1, 20.2) sont positionnés à l'extérieur de l'empilage glissant (25).

5. Biellette selon l'une quelconque des revendications 1 à 4, **caractérisée en ce qu'**elle comporte des zones de guidage (30.1, 30.2) de l'empilage glissant (25).

6. Biellette selon la revendication 5, **caractérisée en ce que** les zones de guidage (30, 30.2) comportent chacune une creusure (31.1, 31.2) réalisée dans au moins un élément de l'empilage glissant (25) autorisant le passage d'un organe de montage (20.1, 20.2) correspondant.

7. Biellette selon l'une quelconque des revendications 1 à 6, **caractérisée en ce que** des excroissances (32.1, 32.2) issues d'au moins un élément élastique (22.1, 22.2) sont intercalées entre les organes de montage (20.1, 20.2) et l'élément rigide (15).

8. Biellette selon l'une quelconque des revendications 1 à 7, **caractérisée en ce que** les organes de montage (20.1, 20.2) comportent des entretoises traversées par des vis (23.1, 23.2) de maintien en compression du premier (22.1) et du deuxième (22.2) éléments élastiques.

9. Biellette selon l'une quelconque des revendications 1 à 8, **caractérisée en ce que** le premier élément élastique (22.1) et le deuxième élément élastique (22.2) forment un seul composant.

10. Biellette selon l'une quelconque des revendications 1 à 9, **caractérisée en ce que** le premier élément élastique (22.1) et le deuxième élément élastique (22.2) sont composés d'un empilage de plusieurs sous-éléments élastiques.
